# EUROPEAN PATENT APPLICATION

(11) **EP 1 229 456 A2**
(43) Date of publication of application: **07.08.2002**
(21) Application number: 01105910.2
(22) Date of filing: 09.03.2001
(51) Int. Cl.: G06F 17/30

(54) **Virtual databank objects**

(30) Priority: 02.02.2001 US 265593 P
(71) Applicant: LION bioscience AG, 69120 Heidelberg (DE)
(72) Inventor: Hansen, David, c/o LION Bioscience Ltd., Cambridge CB5 8DZ (GB); Etzold, Thure, c/o LION Bioscience Ltd., Cambridge CB5 8DZ (GB)
(74) Representative: Betten & Resch

(57) **Abstract**

A virtual databank object generated from one or more databanks, whereas said virtual databank object itself can be queried like any other databank, said method comprising:
a member definition module for defining a virtual databank object as a combination of one or more member databanks forming the constituents of said virtual databank, whereas said virtual databank object itself in its behaviour resembles a member databank and can be queried by a user query like one of the member databanks forming its constituents, whereas when said virtual databank object being queried by a user query its member databanks receive said user query and return a first result set, said virtual databank object further comprising;
a definition module for defining a query to be applied to said one or more member databanks which form the constituents of said virtual databank, said query when being executed retuming a second result set formed by a subset of the entries of said one or more member databanks,
said definition module module further comprising a query link operator defining a boolean operation by which said first result set resulting from said user query to said virtual databank object and said second result set resulting from the query defined in said definition module are to be connected to thereby form a final result set, said final result set effectively being the result set resulting from a user query being directed to said virtual databank object to query said virtual databank object as if it were itself a databank like one of its member databanks.

## Description

### Field of the invention

The present invention relates to databanks, and in particular it relates to virtual databank objects which are created based on existing databanks.

### Background of the invention

Databanks are a common tool in nowadays computer technology, they are used in almost every field to administrate, to store and to query large amounts of data in some ordered form. There exists a huge variety of different databanks, e.g. scientific databanks, financial databanks, economic databanks, etc.

A user may query a databank using a particular piece of software called a database management system which performs the task of administrating the content of the databank, the storage of new data sets, and enables the user to select particular pieces of information according certain search criteria. Very often, a user needs to query several databanks in order to obtain all the information which he desires.

This is particularly the case in the field of biology or biochemistry, where there exists a huge variety of databanks, all having different contents which, however, are somehow related to each other. There are e.g. databanks containing enzyme data, databanks which contain proteine date, databanks which contain data about genes, and so on. One tool for accessing those databanks is the software sequence retrieval system SRS developed and manufactured by Lion bioscience AG of Germany.

SRS is a so-called retrieval software which is highly flexible and can be adapted to be used for querying any of the aforementioned databanks. It is based on a script language called ICARUS. ICARUS has powerful parsing and meta-definition capabilities. These allow for certain pieces of information to be extracted from the aforementioned databanks which are typically flat-file databanks.

However, database management systems or retrieval systems known so far, even if they are - like SRS - capable of querying more than one databank, rely on the querying of existing databanks as they are. This means that the informational content which can be extracted when dispatching a query is limited by the existing databank(s) themselves which themselves are not subject to any modification.

The present invention is directed to overcome this limitation in order to provide a greater flexibility with respect to which informational content can be obtained by dispatching a query to existing databanks.

### Summary of the invention

According to the present invention there is provided a virtual databank object generated from one or more databanks, whereas said virtual databank object itself can be queried like any other databank, said method comprising:
a member definition module for defining a virtual databank object as a combination of one or more member databanks forming the constituents of said virtual databank, whereas said virtual databank object itself in its behaviour resembles a member databank and can be queried by a user query like one of the member databanks forming its constituents, whereas when said virtual databank object being queried by a user query its member databanks receive said user query and return a first result set, said virtual databank object further comprising;
a definition module for defining a query to be applied to said one or more member databanks which form the constituents of said virtual databank, said query when being executed returning a second result set formed by a subset of the entries of said one or more member databanks,
said definition module module further comprising a query link operator defining a boolean operation by which said first result set resulting from said user query to said virtual databank object and said second result set resulting from the query defined in said definition module are to be connected to thereby form a final result set, said final result set effectively being the result set resulting from a user query being directed to said virtual databank object to query said virtual databank object as if it were itself a databank like one of its member databanks.

There is provided a virtual databank object which is generated for one or more databanks. The virtual databank object comprises a member definition module which defines the virtual databank object as a combination of one or more member databanks. The thereby formed virtual databank object in its behaviour itself resembles a member databank and can be queried like one of its member databanks. Further, there is provided a definition module for defining a query to be applied to said one or more member databanks. This query returns a result set comprising a subset of the entries of the one or more member databanks. Moreover, the definition module comprises a definition of a query link operator which defines a Boolean relationship by which result set result set resulting from the query of said definition module is to be connected or linked to another result set resulting from a user query applied to said virtual databank object. When such a user query is dispatched to the virtual databank object, this query is effectively dispatched to the member databanks, thereby returning a (first) result set from the member databanks, and this result set is then combined with the (second) result set from said query of said definition module by said Boolean link operator to obtain a final result set. Thereby, the virtual databank object effectively forms a subset of the entries of the member databanks and nevertheless from the outside can be queried like one of its member databanks itself.

This means that with the aforementioned configuation a user can define virtual databank objects based on already existing databanks in a highly flexible manner. The so created virtual databank objects from the outside look like (single) databanks themselves. A virtual databank object effectively is formed by a combination of its member databanks while applying a certain restriction as defined by the query defined in the definition module and the query link operator defined in they definition module.

According to a particular embodiment, the query of the definition module returns those entries in one of said member databanks which contain a reference to entries in other than said one of said member databanks. This can be used, for example, in order to eliminate those entries in one of the member databanks which have been updated in another of the member databanks.

According to a particular embodiment, the query of the definition module selects a set of entries according to their update time. This facilitates to apply access restrictions according to the update time of databanks. For example, if a restriction is applied, then a user may access only those entries which are at least one year old and has no access to the entries which have been updated more recently.

According to a particular embodiment, the restriction applied by the query of said definition module selects such entries of the member databanks for which a certain data field has a certain content. In case of a biological application, this may e.g. be used to select only such entries which relate to a certain organism, like e.g. human beings.

According to a particular embodiment, the query of said query module may comprise a set of instructions which are written in a programming language. This facilitates to create quite complex queries in said query definition module.

According to a further particular embodiment, a plurality of queries are defined in thequery definition module. With such a plurality of queries, it becomes possible to define different views onto the virtual databank object.

According to a particular embodiment, the different views may be assigned to different users, to different authorization levels, or may be categorized according to some other categorization scheme.

According to a further particular embodiment, the member databanks of the virtual databank object are completely independent of each other, they are indexed separately and independently of each other, and no common index is built for the virtual databank object. This facilitates to avoid any indexing overhead which would be created when merging two existing databanks into a virtual databank object and further building a common index for the virtual databank object.

According to a further particular embodiment, a member databank of the virtual databank object can itself be a virtual databank object. This allows for nesting of virtual databank object structures, furthermore the concept of inheritance may be employed in such nested structures.

A virtual databank object can be queried by dispatching a user query to the virtual databank object like to any of its member databanks. The query is then delivered to the individual member databanks of the virtual databank object and is carried out on the member databank objects. This returns a first result set. A further (second) result set is returned by the query defined in the query definition module. This query also is applied to the member databanks, and it returns a typically different result set than the user query dispatched to the virtual databank object. The two result sets are then combined by applying the query link operator for combining the two result sets. This then results in the final result set returned in response to the query dispatched to the virtual databank object.

The present invention will now be described in detail in connection with accompanying drawings.

### Brief description of the drawings

Fig. 1 shows the querying of a plurality of databanks according to the prior art.
Fig. 2 schematically illustrates an operation of a virtual databank object according to an embodiment of the present invention.
Fig. 3 schematically illustrates a method according to an embodiment of the present invention.
Fig. 4A schematically illustrates a computer system which can be used in connection with an embodiment of the present invention.
Fig. 4B illustrates a computer system which can be used in connection with the present invention.

### Detailed description

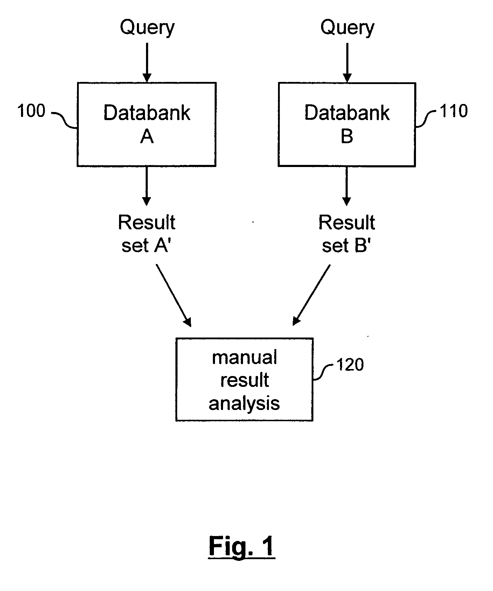

Fig. 1 schematically illustrates two databanks 100, 110, which can be queried separately. Let us assume that databank A has a certain content, and databank B contains updated entries which are also present in databank A but the content of which contains some additional information or some corrected when compared with the content of the corresponding entries in databank A. One example for such a databank configuration are the databanks EMBL and EMBLNEW, the latter containing updated entries of entries which are also present in EMBL. Those databanks are biological databanks and they are well-known in the field of biology and bioinformatics.

If a user wishes to obtain a certain piece of information from the two databanks, the both databanks have to be queried separately using the same query as illustrated in Fig. 1. The query which is applied to databank A delivers a result set A', and the same query applied to databank B will deliver a result set B' which may differ in its content from the result set A'. This is because the databank entries returned in response to the query to databank B may contain additional information, such as updated information, suplementary information, or the like.

The user therefore is provided with two different result sets, and in order to obtain a complete result information, he has to manually analyze both result sets. This manual result analysis includes the identification of those members of result set B' which are also present in result set A', but then deleting those identified members of result set A' for which an updated result is present in result set B'.

On possibility to avoid this rather time-consuming manual analysis as depicted in Fig. 1 would be to merge the two databanks 100 and 110 into a new databank. However, this would involve to build a new index for the merged databank. The building of the such an index, however, is rather time-consuming, especially if both databanks are very large.

The building of an index for the merged databanks would make it necessary to check all identifiers of the individual data sets as to whether a corresponding identifier is present in the other databank, and if so, then the non-updated field information of databank A would have to be replaced by the updated field information of databank B for those data sets which have been found to be present in both databanks.

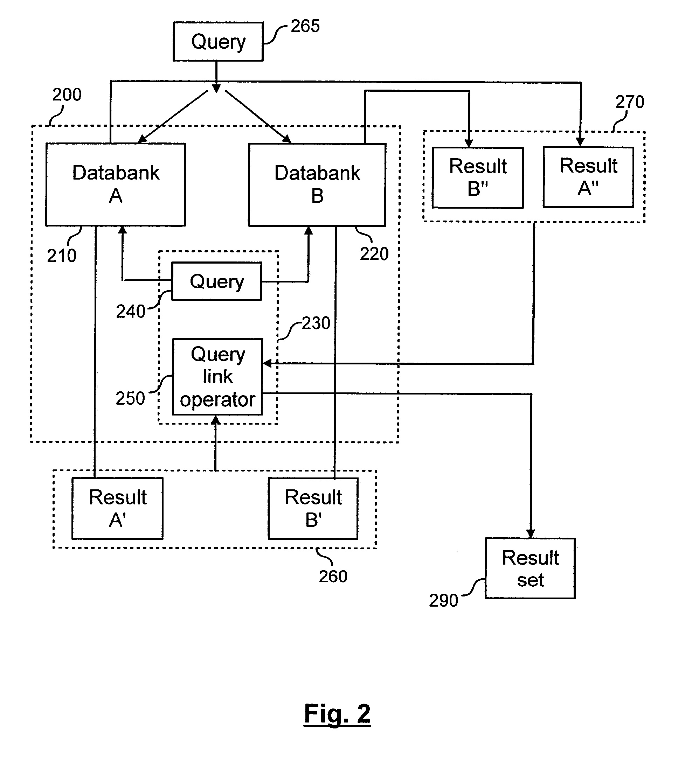

A different approach according to a first embodiment of the present invention will now be explained referring to Fig. 2. In Fig. 2 there is schematically illustrated a so-called virtual databank object 200. The term "virtual" here means that this object is formed based on already existing databanks 210 and 220 which are members of virtual databank object 200. A virtual databank object 200 apppears to the outside world as if it would be a databank itself, like the databanks 210 and 220 which are members (or libraries) of the virtual databank object.

In order to facilitate this appearance to the outside world, the virtual databank object 200 additionally comprises a definition module 230 which defines a query 240 and a query link operator 250. The operation of the definition module 230 in connection with the member databanks 210 and 220 in order to form the virtual databank object 200 will now be explained in the following.

Defintion module 230 defines a query 240 which is applied to both databanks 210 and 220, the latter one containing the updated information. The application of the query to those databanks delivers a result set 260 containing result A' and result B', respectively being returned from databanks 210 and 220.

On the top of Fig. 2 there is illustrated a (user) query 265. The query 265 is the query which the user actually wishes to dispatch to databanks 210 and 220 like in the example of Fig. 1. However, in the present embodiment, the query 265 instead of being dispatched to the individual databanks is dispatched to the virtual databank object 200 since to the outside world (to the user) it appears like a databank itself.

The query then is redirected to the individual databanks 210 and 220 which respectively return result sets B" and A" which together form the combined result set 270 as illustrated in Fig. 2.

This combined result set 270 is now combined with result set 260 by applying the query link operator 250. This then returns the final result set 290. The query link operator here may be any boolean operator by which the two result sets 260 and 270 are connected (linked) to form the final result set. It may e.g. a boolean OR, then final result set would be a set resulting from merging the two result sets 260 and 270. It may also be a boolean AND which delivers as a final result only those entries in sets 260 and 270 which are present in both those sets. Another possibility would be a BUT NOT connection which means e.g. that only those entries which are present in a first result set but not in a second result set are chosen as the final result set.

Let us now turn to our specific example where databank B contains updated entries which are also present in databank A. In order to achieve the goal that the virtual databank object 200 when being queried by query 265 returns the same result set 290 as if it would have been returned if databanks A and B would have been merged into a new databank while building new indices, the following particular settings should be carried out with respect to the query 240 and the query linke operator 250.

The query 240 in this case is a query which returns those entries from databank A which also have a corresponding entry in databank B. Only those entries are returned as results from query 240. Such a query exists in the software sequence retrieval system SRS of Lion bioscience AG, it is carried out by employing the operator ">". In SRS this operation is called a "link". In the present example, the query string would then be "databank B > databank A". Such a query string 240 when applied to databanks 210 and 220 will return a result set 260 which contains only those entries of databank A which are also present in databank B. Therefore, in this particular example the result set B' will be empty.

We now have obtained a result set 260 which contains those entries of databank A which have corresponding entries in databank B. Moreover, in result set 270, we have obtained a complete set of query results which was returned in response to directing query 265 to both databanks 210 and 220. The so obtained result set 270 now is combined with result set 260 by applying the query link operator 250. The query link operator 250 in this particular case is of the type "butnot" which means that the final result set 290 should contain all of the entries in the result set 270 but not those which are also existent in result set 260. Thereby it becomes possible to eliminate those entries of databank A from the result set 270 for which an updated entry exists in the result set 270. Therefore, the final result set 290 is identical to the result set which would have been delivered if both databanks A and B would have been merged into a new databank by building new indices for the merged databank.

This means that virtual databank object 200 offers the user the possibility to obtain with a single query a consistent set of results from both databanks A and B without the need to manually analyze the result set as it was explained in connection with Fig.1.

A virtual databank object as explained above can be easily realized by using object-oriented programming technology. A more detailed example in the field of biology will be described in the following.

In the field of boiological databases, many databases are released as a general release every few months with regular, often daily, updates. The updates contain not only new entries, but also updates to entries already present in the main release. Examples of databases so maintained include SWISSPROT, GENBANK and EMBL. To merge these into one library each time an update is released is impractical because, in addition to indexing the whole library each day, the updated entries in the daily release also need to be deleted from the main release. Hence, on many databank servers e.g. using the SRS retrieval software of Lion bioscience these databases are treated as two databases, one for the main release (SWISSPROT, GENBANK) and one for the updates (SWISSNEW, GENBANKNEW). Virtual databank objects obviate the need to do this.

A virtual databank object having main release and update databanks (libraries) as its members only needs the main release to be indexed once, with the update library being indexed whenever it is updated. A link can then be defined between the release and the update libraries that defines those entries for which an update has been given. Such a link can be defined using the link operator of the SRS query language as described before. The link can then be used as a query to define the entries that are obsolete and should be removed from the virtual library. It shoul be noted that the term link her does not refer to the "query link operator" which links the two result sets by a boolean operator but rather to a link operator in the SRS query language as explained before.

In the example described below, the general SWISSPROT databank release and the SWISSNEW incremental databank release are combined into a single virtual databank object. The individual databanks still exist, however searching the SWISSPROTALL virtual databank object will search both the SWISSPROT release databank (library) and the SWISSNEW update databank (library). The query which her is the link operator returns the joint set of entries in both databanks, but removes from the set of entries those entries in the release library that have been updated in the update library.

The SWISSPROTALL virtual databank object thus formed has two libraries as members (or member databanks), SWISSPROT and SWISSNEW. This leads to a query 240 in the query definition module to define further the virtual library, which takes the form "(swissnew>swissprot)". This query delivers result set 260 which then is connected to the result set 270 resulting from the user query by query link operator "BUT NOT". The symbol for this operator in the SRS system is "!". Therefore, in effect, each user query to the SWISSPROTALL library will have the query !(swissnew>swissprot) appended to it.

The SWISSPROTALL databank uses the same format definition, $SWISSPROT_FORMAT, as the SWISSPROT library. The virtuallnfo attribute of the Library object defines the virtual information of the library and hence defines the library as a virtual library (or in other words, as a virtual databank object). This may look lik the following in case of a SRS databank server:

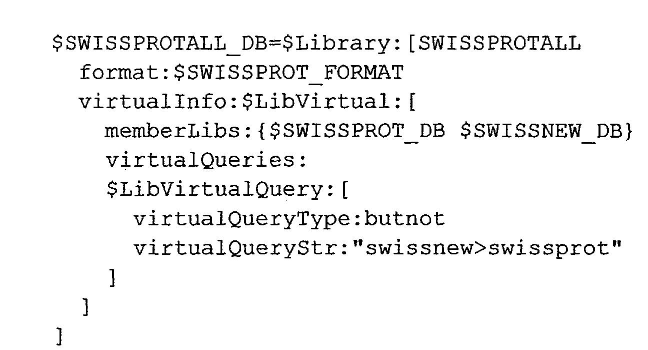

The Icarus object, LibVirtual, specifies the libraries, the query 240 (here: "swissnew>swissprot") and the query link operator (here: butnot) used to define the virtual library. In this case the member libraries or member databanks are $SWISSPROT_DB and $SWISSNEW_DB. The Icarus object, LibVirtuaIQuery, contains the query 240 and the query link operator definition 250 used for further defining the library. In this case, the link from SWISSNEW to SWISSPROT defines those entries in the new update release that were already present in the main release. The query type is butnot, so that the virtual query is combined with a user query using the butnot(!) operator.

Whenever a user searches the SWISSPROTALL library, both the SWISSPROT and SWISSNEW libraries are searched and the set of matching entries is then combined with the result from query 240 (which may be called a "virtual query") using thequery link operator 250 which may also be called a virtual Query Type operator, in this case butnot (!).

A further embodiment of the present invention will now be explained also in connection with Fig. 2.

Assumed that databanks 210 and 220 both contain entries which relate to different organisms, and one of the data fields in each databank specifies the organism to which the corresponding entry belongs. It is then possible to define the virtual databank object 200 in such a manner that it provides an organism-specific version of the two databanks 210 and 220 merged together. Let us, for example, assume that we wish to define virtual databank object 200 such that it contains only entries relating to human beings, then the query 240 would be formulated such that in response to query 240 databanks 210 and 220 return only those entries for which the data field "organism" specifies that this entry relates to a human being.

The combined result set 260 would then contain only entries of databanks 210 and 220 which relate to human beings in the respective result sets A' and B'. In such a case, the query link operator 250 would be a logical AND, so that the linking of result sets 270 and 260 by the query link operator 250 eliminates those entries from result set 270 which do not relate to human beings. Consequently, the final result set 290 contains only entries which related to human beings in response to the query 265 having been dispatched to virtual databank object 200.

Of course, this example could also be used in a more simplified manner, where the virtual databank object 200 contains only databank A as a single member databank.

In this case, the combined result set 260 would only contain result set A', and the result set 270 similarly would only contain result set A".

An example of a definition module 230 for such a case is given below.

In the above example, the virtual databank object 200 contains the well-known databank EMBL as a single member databank, the query 240 takes the form EMBL-ORG:HUMAN* (in the SRS query language) specifying a query for such entries which relate to human beings, and the query link operator is a logical AND. The definition may then take the form

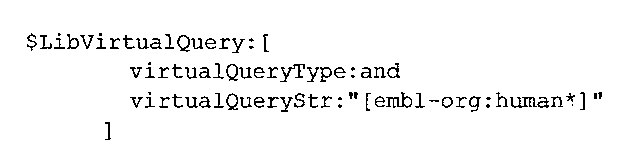

It may be advantageous not only to have the possibility to use the query language provided by the dabase management system or the retrieval system which handles the databanks for defining the query 240, but to be more flexible with respect to the definition of a query. This becomes possible by allowing the query definition 240 being carried out in any other programming or script language. In such a case, the query definition contains a command causing a compiler or an interpreter to recognize that what follows this command is a query definition in a certain programming language or in a certain script language, so that the compiler or the interpreter may call another compiler or interpreter which can do the job of processing the query definition in the programming or the script language.

Such an example is given below where an ICARUS script is used to define the query 240. "QeryStr" here may be any query command in the ICARUS language.

In the example below a simple query is used. It should be noted how the Icarus "@" operator is used to define the Icarus script. All which follows this operator is interpreted as a script to define the query 240.

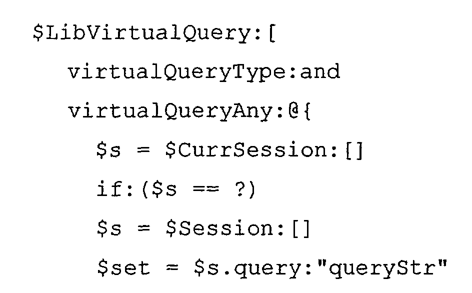

In this example instead of creating a new session to do the query, the Icarus command $CurrSession:[] is used. This returns the current session. If there is no current session, a new session is then created. The query returns a set$set which forms result set 260.

In the next example, an Icarus file is included. This can be a very complicated Icarus script. Again, the same $CurrSession:[ ] as above should be used.

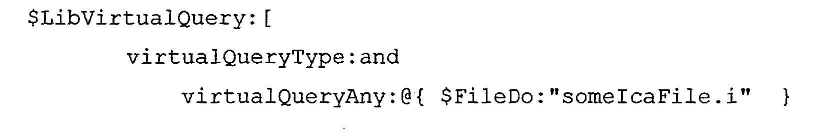

Virtual databank objects can also be used to restrict access to certain entries in the database based on user-dependent definitions of the query. This means that for different users different queries 240 are defined, thereby returning different combined result sets 260 for the different users. When then linking the combined result sets 260 with the result sets 270, there are obtained final result sets 290 which are user-dependent.

This will now be explained in more detail using as an example the SWISSPROT databank.

The SWISSPROT library has a field, $DF_LUPDate, that indexes the last update date of each entry. This field can be used to define a virtual library that allows users access to various entries, depending on the last update of the entry.

The SWISSPROTAGE virtual library which is the virtual databoank object of the following example contains just one databank - SWISSPROTALL_DB (so SWISSPROT and SWISSNEW are searched as described above). The library definition includes
type:restricted

This specifies that the library is restricted to certain users. The $LibVirtual definition then includes two different virtual queries depending on the user. For user1, access is allowed to all entries (as no query is given; for user2, only updates after 1st January 1999 are included.

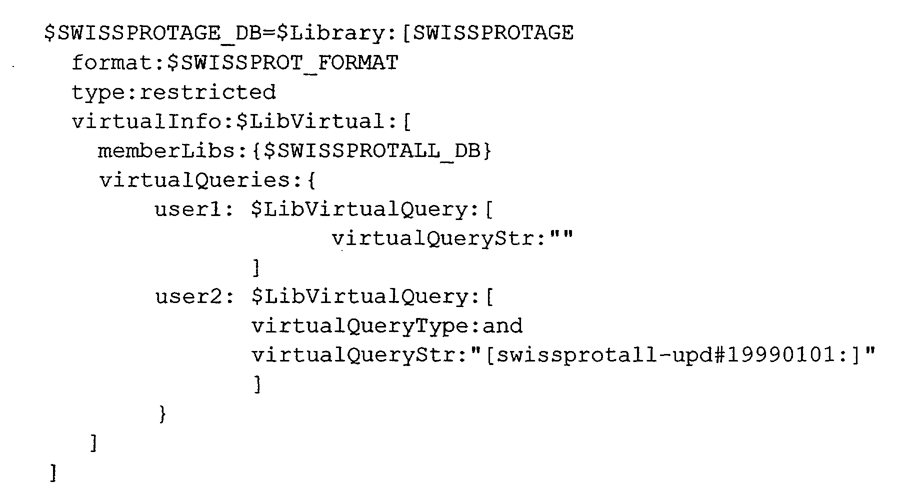

Note that in this case the virtualQueryType (the query link operator 250) is 'and' (&) rather than 'butnot'.

It will be clear to the skilled person from the foreoing examples that the creation and the use of virtual databank objects as explained before significantly reduce the indexing overhead while they provide the uses with a great flexibility with respect to defining combinations of databanks and further defining restriced use on single databanks and combinations of databanks. Virtual databank objects allow the user to define any combinations or subsets of existing databanks, and the thus generated virtual databank objects can be queried like any other existing databanks.

Virtual databank objects may contain member databanks which themselves are again databank objects. This means that virtual databank objects can be nested, they also may employ the concept of inheritance known from object-oriented programming technology.

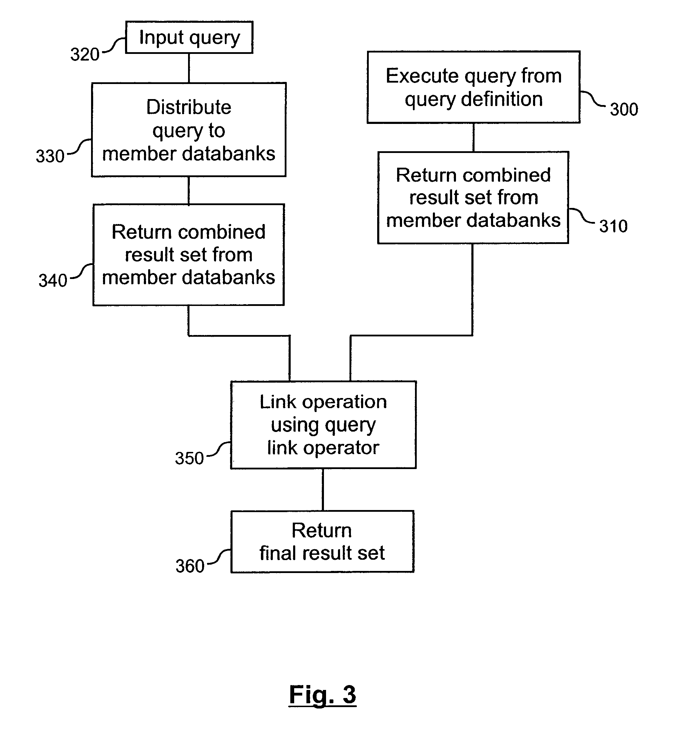

Once such a virtual databank object has been created, it may be used by a database management system or by a retrieval system for executing a query on the virtual databank object. A method for using a virtual databank object as described before in connection with a database management system or a retrieval system will now be explained in more detail in connection with Fig. 3.

Fig. 3 schematically illustrates the steps which are carried out when a virtual databank object is used by a database management system or a retrieval system. The steps 300 and 310 at the upper right part of Fig. 3 relate to the operation of the query definition module 230 of Fig. 2. The steps 320, 330, and 340 on the upper left part of Fig. 3 relate to the dispatching of the user query 265 to the member datanks 210 and 220 as illustrated in Fig. 2. Finally, the link operation 350 of Fig. 3 relates to the query link operator 250 as illustrated in Fig. 2.

In step 300, the query as defined in query definition module 230 of Fig. 2 is executed, which means it is dispatched to the member databanks of the virtual databank object and then there is obtained a combined result set from the member databanks in step 310. Since steps 300 and 310 relate to definitions which usually are predefined and are set in the query definition module, those steps may be executed once and the combined result set which is returned in step 310 may be saved to disk. It may then later be retrieved from disk for performing the link operation 350 which will be explained later.

To the contrary, step 320 relates to the input of the user query 265 illustrated in Fig. 2. The query inputted by the user in step 320 is distributed in step 330 to the member databanks of the virtual databank object. In Fig. 2 member databanks 210 and 220 are illustrated. Executing the query onto those databanks will return a combined result set in step 340 from the member databanks. In Fig. 2 this is illustrated as the combined result set 270.

After the steps 300 to 340 have been executed, two combined result sets exist, one from the the user query to the member databanks, and one from the query which was defined in the query definition module and which has been dispatched to the member databanks in step 300. Those two combined result sets then are linked by a Boolean operation in step 350. The Boolean operation corresponds to the query link operator 250 illustrated in Fig. 2.

As a consequence, in step 360 there is returned a final result set which is obtained from performing the link operation using the query link operator in step 350. This final result set corresponds to result set 290 illustrated in Fig. 2.

As mentioned before, steps 300 and 310 may be carried out in advance, and the result obtained in step 310 may be saved to disk. When performing the query link operation in step 350, the two combined result sets then can be easily linked using the Boolean link operator, for example by referring to the individual data set identifiers of the results in the two combined result sets 260 and 270. Those two combined result sets each contain a set of databank entries from databanks 210 and 220, and typically each of the databank entries has a unique identifier. Using this unique identifier any Boolean linking operation can perform on the two combined result sets to obtain the final result set.

It will readily apparent to the skilled person that the embodiments of the present invention as described before can be realized by a computer program running on a computer. In particular, a virtual databank object may be implemented by a computer program (or parts thereof), and a database management system or a retrieval system processing a virtual databank object can be implemented by means of a computer programm as well. Moreover, embodiments of the present invention may take the form of a computer program embodied in any storage medium or any carrier medium, such as a transmission link, an internet connection, a local area network connection, or the like. A computer on which such a computer program may be run can take the form of any general-purpose computer, such as commercially available personal computers, workstations, super computers, special-purpose computers, or the like.

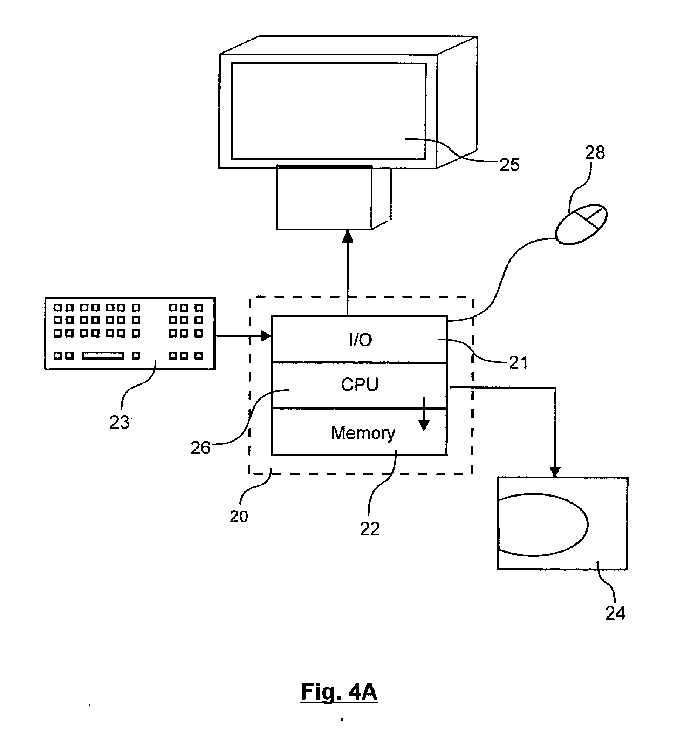

The present invention is applicable to a hardware configuration like a personal computer or a work station as illustrated schematically in Figure 4A. The computer may comprise a central processing unit CPU 26, an input output I/O unit 21, an internal memory 22 and an external memory 24. The computer may further comprise standard input devices like a keyboard 23, a mouse 28 or a speech processing means (not illustrated).

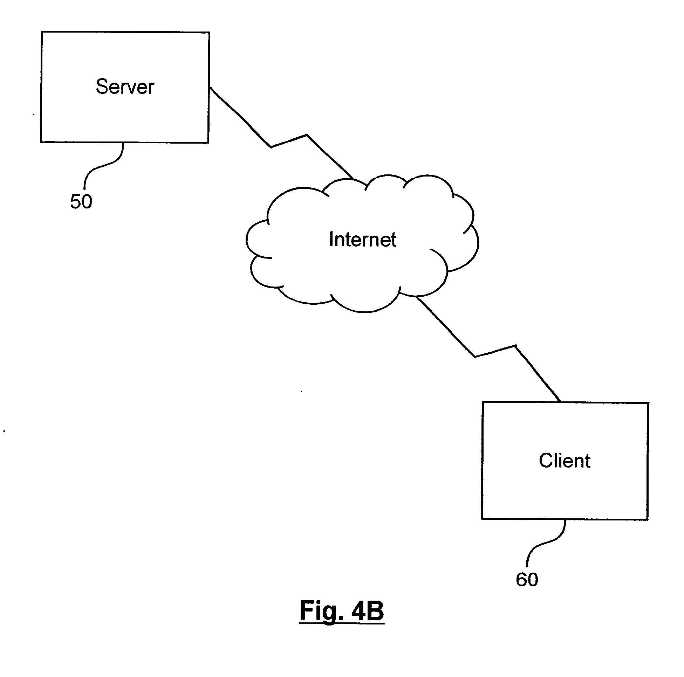

The invention, however, may also be applied to a client-server configuration as illustrated in Figure 4B. The final result of a user query may be displayed on a display screen of a client device 60 while some or all steps of the method as illustrated before in connection with Figure 4 are carried out on one or more server computer accessible by a client device over a data network such as the internet using a browser application or the like.

## Claims

1. A virtual databank object generated from one or more databanks, whereas said virtual databank object itself can be queried like any other databank, said method comprising:
a member definition module for defining a virtual databank object as a combination of one or more member databanks forming the constituents of said virtual databank, whereas said virtual databank object itself in its behaviour resembles a member databank and can be queried by a user query like one of the member databanks forming its constituents, whereas when said virtual databank object being queried by a user query its member databanks receive said user query and return a first result set, said virtual databank object further comprising;
a definition module for defining a query to be applied to said one or more member databanks which form the constituents of said virtual databank, said query when being executed returning a second result set formed by a subset of the entries of said one or more member databanks,
said definition module module further comprising a query link operator defining a boolean operation by which said first result set resulting from said user query to said virtual databank object and said second result set resulting from the query defined in said definition module are to be connected to thereby form a final result set, said final result set effectively being the result set resulting from a user query being directed to said virtual databank object to query said virtual databank object as if it were itself a databank like one of its member databanks.

2. The virtual databank object of claim 1, wherein
said constituents of said virtual databank are a plurality of member databanks, and wherein said query defined in said definition module returns those entries in one of said member databanks which contain a reference to entries in others than said one of said member databanks.

3. The virtual databank object of claim 1 or 2, wherein
said query defined in said definition module returns those entries in said member databanks which match with one or more search criteria defining the query in said definition module.

4. The virtual databank object of one of the preceeding claims, wherein
said query definied in said definition module selects a set of entries of said one or more member databanks according to their update time.

5. The virtual databank object of one of the preceeding claims, wherein
said query definied in said definition module selects a set of entries of said one or more member databanks for which a certain data field has a certain content.

6. The virtual databank object of one of the preceeding claims, wherein
said member databanks are biological or biochemical databanks and said query definied in said definition module selects a set of entries of said one or more member databanks which match with one or more biological search criteria.

7. The virtual databank object of one of the preceeding claims, wherein
said query defined in said definition module comprises a set of instructions in a programming language or a script language.

8. The virtual databank object of one of the preceeding claims, wherein
a plurality of queries are defined in said definition module, each of said plurality of said queries defining a different view onto said virtual databank object.

9. The virtual databank object of claim 8, wherein said different queries are assigned to different users of to different authorization or priority levels.

10. The virtual databank object of claim 9, wherein different users or different authorization levels are given access to different subsets of entries in said member databanks, thereby enabling a differentiated access to a virtual databank object depending on the user or the authorization level by of from which the virtual databank object is queried.

11. The virtual databank object of one of the preceeding claims, wherein
said member databanks are independent databanks which are indexed independently of each other, and wherein no index is built for the virtual databank object

12. A method for querying a virtual databank object according to one of the preceeding claims, said method comprising:
dispatching a user query to said virtual databank object;
delivering said query to the member databanks of said virtual databank object to carry out the query on said member databanks to thereby obtain a first result set;
combining said first result set with a second result set resulting from a query defined in a definition module, said combination being carried out based on a query link operator defined in said definition module, said query link operator defining a boolean relationship by which said first result set and said second result set are to be combined to thereby obtain a final result set, said final result set being the effective result which results from dispatching said user query to said virtual databank object.

13. The method of claim 12, further comprising the features as defined in one or a combination of claims 2 to 11.

14. The method of claim 12 or 13, wherein said query defined in said definition module is carried out in advance and said first result set is then stored to be retreived when it is to be combined with said second result set.

15. A computer program product comprising computer executable instructions which enable a computer to implement a virtual databank object according to one of claims 1 to 11 or to carry out a method according to one of claims 12 to 14.
